# EUROPÄISCHE PATENTSCHRIFT

(11) **EP 0 318 529 B1**
(45) Veröffentlichungstag und Bekanntmachung des Hinweises auf die Patenterteilung: **10.05.1995**
(21) Anmeldenummer: 88904204.0
(22) Anmeldetag: 06.05.1988
(51) Int. Cl.: C02F 3/12, C02F 3/10

(54) **VERFAHREN ZUR REINIGUNG VON ABWÄSSERN**
PROCESS FOR THE PURIFICATION OF WASTE WATER
PROCEDE D'EPURATION D'EAUX USEES

(30) Priorität: 07.05.1987 DE 3715867
(43) Veröffentlichungstag der Anmeldung: 07.06.1989
(73) Patentinhaber: SCHERING AKTIENGESELLSCHAFT, 13342 Berlin (DE)
(72) Erfinder: WEBER, Alfred, D-1000 Berlin 37 (DE); KLAGES, Uwe, D-1000 Berlin 28 (DE); DONNER, Christoph, D-1000 Berlin 28 (DE)
(86) Internationale Anmeldenummer: DE8800281
(87) Internationale Veröffentlichungsnummer: WO8808825

(56) Entgegenhaltungen:
- EP-A- 0 121 851
- H20, vol. 20, no.16, 1987 (vewin, Rijwijk,nl) J. Tramper: Immobilisatie van micro-organismen en toepassingen in de milieu-hygiene", Seitn 375-377, siehe Seite 377, mittlere Spalte, Zeilen 16-19, Seite 376, linke Spalte, Zeiel 32- mittlere Spalte, Zeile 9
- Applied and Environmental Microbiology, Band 39, Nr. 6, Juni 1980, AMerican Society for Microbiology ( Washington, DC) BR RIttmann et al:" Utilization of dichlomethane by suspended and fixed film bacteria" Seiten 1225-1226, siehe Seite 1225, linke Spalte, Letzter Absatz- rechte Spalte, Absatz 2. Seite 1226 Linke Spalte, Absatz 2 in der Anmeldung erwaehnt
- Biotechnology& Bioengeneering, Band 30, Nr.1, July 1987, John Wiley & Sons, INc, ( New York, New York, US) H. Tanaka et al." A new immobilited cell system with protection against toxic solvents, Seiten 22-30, siehe Seite 22, Zusammenfassung, Introduction

## Beschreibung

Die Erfindung betrifft ein Verfahren zur Reinigung von Abwässern (inklusive Prozeßwässern) die biologisch abbaubare Substanzen enthalten.

Derartige Verfahren sind seit langem bekannt. So wird beispielsweise im General Subjects Index der Chemical Abstracts unter dem Stichwort Wastwater treatment unter anderem auf den biologischen Abbau von aliphatischen Alkoholen, Alkylphosphaten, Ketonen, Kohlenwasserstoffen und Aminen, Ammoniumverbindungen, Amiden, chlorierten Kohlenwasserstoffen, Cyaniden, Heterocyclen, Kohlehydraten, Thiocyanaten, Farbstoffen, Netzmitteln, Herbiziden, Pestiziden etc. hingewiesen.

Diese bekannten Verfahren haben den Nachteil, daß sie erfolgreich nur durchgeführt werden können, wenn sie von Fachleuten ständig überwacht und betreut werden. Dies hat zur Folge, daß die Abwässer unterschiedlicher Herkunft - und somit auch mit unterschiedlichen biologisch abbaubaren Substanzen - in zentralen Abwasser-Aufbereitungsanlagen gesammelt und aufbereitet werden.

Der vorliegenden Erfindung lag die Aufgabe zugrunde, ein in ökonomischer Weise dezentral vom einzelnen Erzeuger des Abwassers und/oder am Ort der Entstehung des Abwassers durchführbares Verfahren zur Reinigung von Abwässern, die als biologisch abbaubare Substanzen halogenierte Kohlenwasserstoffe der allgemeinen Formel

Cn Xm H(2n+2-m)

worin
- X: ein Halogenatom und
- n: die Ziffern 1 oder 2 und
- m: die Ziffern 1 bis 4 bedeuten, enthalten mittels immobilisierter zum biologischen Abbau befähigter Mikroorganismen zu entwickeln
Aus der Publikation von J. Tramper "Immobilisatic van microorganismen en toepassingen in de milieu-hygiene" in H₂O, Vol. 20, No. 16 (1987 (Vewin, Rijswijk, NL), Seite 375-377 ist ein Verfahren zur Abwasserreinigung mit Hilfe immobilisierter Mikroorganismen vorbekannt welches mit Hilfe von in Alginat fixierten Mikroorganismen durchgeführt wird. Dieses ist aber für die Abwasserreinigung von mit halogenierten Kohlenwasserstoffen kontaminierten Abwässern ungeeignet, da die freigesetzten Halogenwasserstoffe störend wirken.

Es wurde nun gefunden, daß man mit halogenierten Kohlenwasserstoffen kontaminierte Abwässer mit gutem Erfolg aufreinigen kann, wenn man zur Immobilisierung der Mikroorganismen als Polymere ein solches auf Caragenan oder Acrylamid und/oder Methacrylbasis verwendet.

Trotz des erheblichen Aufwandes, der mit der Immobilisierung der Mikroorganismen durch Einbetten in ein die Mikroorganismen nicht denaturierendes Polymeres verbunden ist, ist das erfindungsgemäße Verfahren überraschenderweise zur Reinigung von Abwässern, die definierte biologisch abbaubare aliphatische Substanzen enthalten in der Regel sehr viel weniger aufwendig, als die vorbekannten Verfahren. Dies unter anderem aus folgenden, rückblickend einleuchtend erscheinenden Gründen:
Wenn man die Reinigung dezentral beim Erzeuger des Abwassers vornimmt, sind wesentlich geringere Wassermengen zu reinigen. Dies ist nicht nur ökonomischer sondern auch effektiver, da die Verunreinigungen am Ort des Entstehens bekannt sind und in konzentrierter Form vorliegen, als in zentralen Abwasser-Aufbereitungsanlagen.

Das erfindungsgemäße Verfahren läßt sich gut standardisieren und reproduzieren. Die hierzu benötigten Immobilisate können gewerbsmäßig angefertigt werden und mit entsprechenden Arbeitsanweisungen versehen an die einzelnen Benutzer geliefert werden, die dann das Verfahren durchführen können, ohne daß eine aufwendige Kontrolle und Betreuung durch Fachleute erforderlich wäre.

Das erfindungsgemäße Verfahren gestattet es, solche Mikroorganismen zu verwenden, die zum biologischen Abbau des jeweils anfallenden Abwassers besonders befähigt sind. Dies hat den Vorteil, daß man zur Durchführung des erfindungsgemäßen Verfahrens nur relativ kurze Reaktionszeiten benötigt.

Gegenüber rein chemischen Abwasser-Aufbereitungsanlagen haben die biologischen Anlagen den Vorzug, daß sie ökonomischer sind, weniger Energie benötigen und weniger Abwasser belastend sind.

Die Art des Mikroorganismus, den man zur Durchführung des erfindungsgemäßen Verfahrens benötigt, ist selbstverständlich davon abhängig, mit welchen biologisch abbaubaren Substanzen das zu reinigende Abwasser belastet ist. Diese Mikroorganismen kann man aus den Mischkulturen zentraler Abwasser-Aufbereitungsanlagen, in denen ein derartiger Abbau durchgeführt wird, in vorbekannter Weise isolieren. Andererseits sind aber auch viele dieser Mikroorganismen bereits in öffentlichen Stammsammlungen deponiert und stehen der Fachwelt zur freien Verfügung.

Zur Reinigung von Abwässern, die mehrere biologisch abbaubare Substanzen enthalten, können Immobilisate von Mikroorganismen-Mischkulturen verwendet werden. Andererseits ist es aber auch möglich jeweils Immobilisate der einzelnen Mikroorganismen spec. herzustellen und diese vor der Durchführung des erfindungsgemäßen Verfahrens zu mischen.

Die Immobilisierung der Mikroorganismen durch Einbetten in ein die Mikroorganismen nicht denaturierendes Polymeres erfolgt nach Methoden, die dem Fachmann wohl bekannt sind. (I. Chibata Immobilized Enzymes; Reserch and Development; John Wiley and Sons, New York et. 1978; Methods in Enzymology Vol 44 (19..); Klaus Mosbach Immobilized Cells and Arghanelles, Academic Press, New York, 1976, Vol 1 und 2; Bo Matthiasson Immobilised Cells and Organells, CRC Press Inc., Boca Raton, Florida Vol. 1 und 2.)

Geeignete Immobilisate sind erfindungsgemäß
Mikroorganismen-Immobilisate auf Carragenan-Basis.
Diese lassen sich beispielsweise herstellen, indem man die Mikroorganismen in einer auf 25 bis 50° C erwärmten 0,1 bis 5,0 gewichtsprozentigen wässrigen Carragenan-Lösung suspendiert, die Lösung erkalten läßt bis sie gelartig wird, das Gel mechanisch zerkleinert und dann in einer 0,2 bis 2,0 gewichtsprozentige wässrigen Lösung eines Kaliumsalzes (beispielsweise Kaliumchlorid) härtet.

Außerdem sind erfindungsgemäß geignet Mikroorganismen-Immobilisate auf Acrylamid - und/oder Methacrylamid-Basis. Solche können beispielsweise nach dem in der DE-A 22 52 888 beschriebenen Verfahren hergestellt werden.

Zwecks Erhöhung der mechanischen Stabilität und Dichte der Immobilisate, kann man den Suspensionen vor der Polymerisation zusätzlich noch anorganische oder organische Trägermaterialen zusetzen. Geeignete Trägermaterialen sind beispielsweise Kieselgel, Kiesalgur, Aktivkohle oder Zellulose. Eine geeignete Methode zur Herstellung solcher Immobilisate ist beispielsweise folgende: Die Mikroorganismen-Biomasse wird in einer wässrigen Mischung von 0,5-5 gewichtsprozent Carragenan und 0,5-35 gewichtsprozent gallertartiger Kielselsäure (hergestellt aus Wasserglas und Säuren und anschließend demineralisiert oder käuflich erworben) suspendiert und die Mischung in eine Lösung von beispielsweise 1 bis 10 % Calziumchlorid, Kaliumchlorid etc. eingetropft.

Das optimale Verhältnis von Mikroorganismen-Biomasse zur Menge des gelbindenden Agens ist selbstverständlich von der Art der verwendeten Komponenten abhängig und muß im Einzelfall mittels Vorversuchen, wie sie dem Fachmann geläufig sind, ermittelt werden.

Als Vorrichtungen, in denen das erfindungsgemäße Verfahren durchgeführt werden kann, können beispielsweise gegebenenfalls auf 10-35° C beheizbare und belüftbare, mit einem Rührer versehene Kessel verwendet werden, in denen Abwasser solange unter Rühren und Belüften mit dem Immobilisat in Kontakt gebracht wird, bis die organischen Substanzen abgebaut sind. Nach erfolgter Reinigung wird das Abwasser filtriert oder dekantiert und der Kessel erneut mit Abwasser gefüllt.

Andererseits kann man das Verfahren beispielsweise auch kontinuierlich durchführen, indem man das Wasser durch eine gegebenenfalls beheizbare und belüftbare Säule oder vorgefertigte Kartusche leitet, die das Immobilisat enthält.

Es ist für den Fachmann offenkundig, daß derartige Vorrichtungen auch zur Reinigung von Abluft verwendet werden können, indem man diese durch die mit wässriger Immobilisat-Suspension gefüllten Vorrichtung leitet.

Abwässer, die sich mit Hilfe des erfindungsgemäßen Verfahrens gut reinigen lassen sind auch solche Abwässer, die als biologisch abbaubare Substanz neben anderen Verunreinigungen halogenierte Kohlenwasserstoffe der allgemeinen Formel

Cn Xm H(2n+2-m)

worin
- X: ein Halogenatom (vorzugsweise ein Bromatom, ein Jodatom oder insbesondere ein Chloratom),
- n: die Ziffern 1 oder 2 und
- m: die Ziffern 1 bis 4 bedeuten.

Es ist bekannt, daß derartige halogenierte Kohlenwasserstoffe, wie das Methylbromid, Methyljodid, Trichlormethan, Tetrachlormethan, 1,1-Dichlorethan, 1,2-Dichlorethan, 1,1,2-Trichlorethan und 1,1,2,2-Tetrachlorethan mit Hilfe von Mikroorganismen biologisch abbaubar sind (Appl. Environ. Microbiol. 40, 1980, 1225 f; 47, 1984, 825f und 49, 1985, 673f; Arch. Microbiol. 130, 1981, 366f; Conservation and Recycling 8, 1985, 91f).

Die nachfolgenden Ausführungsbeispiele dienen zur näheren Erläuterung des erfindungsgemäßen Verfahrens. Die in den einzelnen Beispielen beschriebenen Verfahrensbedingungen sind nicht optimiert, die in den Beispielen benutzten Mikroorganismen sind in öffentlichen Stammsammlungen deponiert und stehen der Fachwelt zur freien Verfügung.

### Beispiel 1

a) Ein 21 Erlenmeyerkolben mit 500 ml einer sterilen Nährlösung enthaltend 0,68 g Kaliumdihydrogenphosphat, 1,075 g Dinatriumhydrogenphosphat, 0,25 g Ammoniumsulfat, 0,1 g Magnesiumsulfat-Heptahydrat, 5 ml einer wässrigen Lösung von Spurenelementen (diese enthält pro Liter 530 mg Calziumchlorid, 200 mg Eisen(II)-sulfat-Heptahydrat, 20 mg Mangan(II)-sulfat-Pentahydrat, 40 mg Kupfer(II)-sulfat-Pentahydrat, 20 mg Zink(II)-sulfat-Heptahydrat, 3 mg Borsäure, 4 mg Kobalt(II)-chlorid, 4 mg Natriummolybdat-Dihydrat und 1,0 ml konz. Schwefelsäure) und 0,5 g Dichlormethan - auf einen pH-Wert 6,9 eingestellt - wird mit einer Lyophilkultur von Pseudomonas spec. DM1 (NCIB, 11673) beimpft, verschlossen und auf einen Rotationsschüttler mit 145 Umdrehungen pro Minute bei 30° C 72 Stunden lang geschüttelt.
   12 2-Liter Erlenmeyerkolben mit jeweils 500 ml des gleichen sterilen Nährmediums werden mit jeweils 50 ml der Vorkultur beimpft und in gleicher Weise wie die Vorkultur 48 Stunden lang germiniert.
   Anschließend werden die Kulturen vereinigt und in einem Labor Separator LG 205 [Firma Westfalia Separator AG/Oelde (Westf.)] bei 10 000 Umdrehungen pro Minute separiert. Die abgeschleuderte Zellmasse wird zur Entfernung anhaftender Bestandteile des Nährmediums in sterilem Leitungswasser resuspendiert und erneut zentrifugiert. Man erhält so 4,6 g einer feuchten Pseudomonas spec. (NCIB 11 673) Biomasse mit einem Gehalt von 11,3 % Bakterien-Trockenmasse.
b) 1,5 g 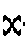 -Carragenan Typ III (Hersteller: Sigma Chemical Comp., St. Luis; USA) werden in 40 ml Leitungswasser eingetragen und hitzesterilisiert, wobei sich das 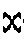 -Carragenan löst.
   Dann läßt man die Lösung auf 48° C erkalten, versetzt sie mit einer 40° C warmen Suspension von 6 g feuchter Pseudomonas spec. (NCIB 11673) Biomasse (hergestellt nach Beispiel 1 a) in 5 ml einer 0,1 molaren wässrigen Phosphatpufferlösung von pH 7, rührt die Mischung 20 sek. lang und gießt sie in eine Sandwichzelle, deren Glasplatten einen Abstand von 3 mm haben.
   Nach 30 minutigem Stehen wird die Masse entnommen, durch ein Sieb von 3 mm Maschenweite gedrückt und in Anteilen von jeweils 5 g 16 Stunden lang bei 8° C in jeweils 50 ml einer 2 %igen wässrigen Kaliumchlorid-Lösung gehärtet. Dann filtriert man die Immobilisate ab und resuspendiert sie jeweils in 50 ml Leitungswasser.
c) Ein geschlossener 1 l Glasfermenter mit automatischer pH-Wert-Steuerung wird mit 200 ml Leitungswasser, 0,075 ml Dichlormethan (dies entspricht 1 g Dichlormethan pro Liter) und 10 ml der gemäß Beispiel 1 b hergestellten Immobilisat-Suspension, versetzt, und unter automatischer pH-Wert Einstellung auf 7,2 90 Minuten lang mit 145 Umdrehungen pro Minute bei 30° C gerührt. Nach dieser Zeit ist das Dichlormethan in der Reaktionsmischung praktisch vollständig abgebaut.
   Nach Filtration ist das zurückgewonnene Immobilisat erneut verwendbar und zeigt keine Aktivitätsverluste.

### Beispiel 2

Ein 500 ml Erlenmeyerkolben wird mit 100 ml Leitungswasser, 0,1 ml einer 40 %igen wässrigen Formaldehyd-Lösung (dies entspricht 0,4 g Formaldehyd pro Liter) und 10 ml der gemäß Beispiel 1 b hergestellten Immobilisat-Suspension versetzt, verschlossen und 60 Minuten lang bei 30° C mit 145 Umdrehungen pro Minute geschüttelt. Nach dieser Zeit ist der Formaldehyd praktisch vollständig abgebaut.

Nach der Filtration ist das zurückgewonnene Immobilisat erneut verwendbar und zeigt keine Aktivitätsverluste.

### Beispiel 3

Ein geschlossener 1 l Glasfermenter mit automatischer pH-Wert-Steuerung wird mit 500 ml Leitungswasser, 0,045 ml 1-Chlor2-propanon (dies entspricht 0,5 g 1-Chlor-2-propanon pro Liter) und 10 ml der gemäß Beispiel 1 b hergestellten Immobilisat-Suspension versetzt, und unter automatischer pH-Wert Einstellung auf 7,2 90 Minuten lang mit 145 Umdrehungen pro Minute bei 30° C gerührt. Nach dieser Zeit ist das 1-Chlor-2-propanon praktisch vollständig abgebaut.

### Beispiel 4

Ein 500 ml Erlenmeyerkolben wird mit 100 ml Leitungswasser, 0,4 ml Methanol (dies entspricht 3,2 g Methanol pro Liter) und 10 ml der gemäß Beispiel 1 b hergestellten Immobilisat-Suspension versetzt, verschlossen und 120 Minuten lang bei 30° C mit 145 Umdrehungen pro Minute geschüttelt. Nach dieser Zeit ist das Methanol praktisch vollständig abgebaut.

Nach der Filtration ist das zurückgewonnene Immobilisat erneut verwendbar und zeigt keine Aktivitätsverluste.

### Beispiel 5

2 g feuchte Pseudomonas spec. (NCIB 11673) - Biomasse (hergestellt nach Beispiel 1a) werden in 20 ml einer eisgekühlten 0,1 molaren wässrigen Tris-(hydroxymethyl)-aminomethan-Puffer von pH 7,5 suspendiert.

Parallel hierzu werden 7,2 g Acrylamid und 0,4 g N,N'-Methylen-bisacrylamid in Wasser gelöst und unter Eiskühlung mit Wasser auf 25 ml verdünnt.

Anschließend vereinigt man beide Lösungen, versetzt sie mit 2,5 ml einer 10 %igen wässrigen Lösung von N,N,N',N',-Tetramethylethyldiamin und 0,5 ml einer 5 %igen wässrigen Kaliumpersulfat-Lösung und gießt die Mischung in eine Sandwichzelle mit 3 mm Plattenabstand. Man spült die Mischung 2 Minuten lang mit Stickstoff und kühlt sie 6 Minuten lang im Eisbad. Dann läßt man sie 1 Stunde lang bei Raumtemperatur stehen, drückt das Gel durch ein Sieb von 2 mm Maschenweite, wäscht die erhaltenen Pellets dreimal mit je 250 ml 0,05 molaren Tris-hydroxymethyl-aminomethan Puffer vom pH 7,5 und bewahrt ihn hierin bei 4° C auf.

Die so hergestellten Pseudomonas spec. (NICB 11673)-Immobilisat-Suspensionen können unter den im Beispiel 1 c beschriebenen Bedingungen zum Reinigen von Dichlormethan-haltigen Wasser verwendet werden.

### Beispiel 6

400 mg Natrium 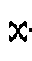 -Carragenan Typ III (Hersteller: Sigma Chemical Comp., St. Luis, USA) werden in 10 ml Leitungswasser gelöst, mit 5 g Kieselgel (Hersteller Merck AG, Darmstadt; DE) und 1,0 g feuchter Pseudomonas spec. NCIB 11673)-Biomasse hergestellt nach Beispiel 1 b -homogenisiert.

Mittels einer Schlauchpumpe wird dieses Homogenisat durch einen Silikonkautschuk-Schlauch, dessen Ende als Spitze ausgebildet ist unter Rühren in 500 ml einer sterilisierten 0,1 molaren wässrigen Kaliumchlorid-Lösung eingetropft.

Man rührt die Mischung noch eine Stunde lang, filtriert das erhaltene Immobilisat ab, wäscht es mit Leitungswasser.

Die so hergestellten Pseudomonas spec. (NICB 11673)-Immobilisat-Suspensionen können unter den im Beispiel 1 c beschriebenen Bedingungen zum Reinigen von Dichlormethan-haltigen Wasser verwendet werden.

## Patentansprüche

1. Verfahren zur Reinigung von Abwässern, die halogenierte Kohlenwasserstoffe der allgemeinen Formel
Cn Xm H(2n+2-m)
worin
X ein Halogenatom und
n die Ziffern 1 oder 2 und
m die Ziffern 1 bis 4 bedeuten, enthalten mittels immobilisierter zum biologischen Abbau befähigter Mikroorganismen, dadurch gekennzeichnet, daß das zur Immobilisierung der Mikroorganismen verwendete Polymere ein Carragenan oder ein Polymeres auf Acrylamid- und/oder Methacrylamid-Basis ist.

2. Verfahren zur Reinigung von Abwässern gemäß Patentanspruch 1 bis 8, dadurch gekennzeichnet, daß es am Ort der Entstehung des Abwassers durchgeführt wird.

## Claims

1. Process for the purification of waste-waters containing halogenated hydrocarbons of the general formula
Cn Xm H(2n+2-m),
wherein
X represents a halogen atom and
n represents the number 1 or 2 and
m represents the numbers 1 to 4,
by means of immobilised microorganisms capable of effecting biological degradation, characterised in that the polymer used to immobilize the microorganisms is a carrageenin or a polymer based on acrylamide and/or methacrylamide.

2. Process for the purification of waste-waters according to patent claim 1 to 8, characterised in that it is carried out at the site where the waste-water is produced.

## Revendications

1. Procédé d'épuration d'eaux usées contenant des hydrocarbures halogénés de formule générale
Cn Xm H(2n+2-m)
dans laquelle
X désigne un atome d'halogène,
n le nombre 1 ou 2 et
m un nombre de 1 à 4, avec des microorganismes immobilisés pouvant effectuer des biodégradations, procédé caractérisé en ce que la matière polymère servant à immobiliser les micro-organismes est un carraghen ou un polymère à base d'acrylamide et/ou de méthacrylamide.

2. Procédé d'épuration d'eau usées selon la revendication 1, caractérisé en ce que l'on opère sur le lieu où se forme l'eau usée.
